# EUROPEAN PATENT SPECIFICATION

(11) **EP 3 507 956 B1**
(45) Date of publication and mention of the grant of the patent: **13.09.2023**
(21) Application number: 17758755.7
(22) Date of filing: 18.08.2017
(51) Int. Cl.: H04L 27/26

(54) **FRAME FORMAT WITH MULTIPLE GUARD INTERVAL LENGTHS**
FORMAT EINES RAHMENS MIT MEHREREN SCHUTZINTERVALLLÄNGEN
FORMAT DE CADRE AVEC MULTIPLES LONGUEURS D'INTERVALLE DE GARDE

(30) Priority: 31.08.2016 US 201662381705 P; 17.08.2017 US 201715679710
(43) Date of publication of application: 10.07.2019
(73) Proprietor: QUALCOMM Incorporated, San Diego, CA 92121-1714 (US)
(72) Inventor: KASHER, Assaf Yaakov, San Diego California 92121-1714 (US); EITAN, Alecsander Petru, San Diego California 92121-1714 (US); SANDEROVICH, Amichai, San Diego California 92121-1714 (US)
(74) Representative: Bardehle Pagenberg Partnerschaft mbB Patentanwälte Rechtsanwälte
(86) International application number: PCT/US2017/047620
(87) International publication number: WO 2018/044597

(56) References cited:
- EP-A1- 1 811 733
- WO-A1-2016/179493
- US-A1- 2006 250 940
- US-A1- 2012 294 392
- CARLOS CORDEIRO (INTEL): "Specification Framework for TGay ; 11-15-1358-05-00ay-specification-framework -for-tgay", IEEE DRAFT; 11-15-1358-05-00AY-SPECIFICATION-FRAMEWORK -FOR-TGAY, IEEE-SA MENTOR, PISCATAWAY, NJ USA , vol. 802.11ay, no. 5 17 August 2016 (2016-08-17), pages 1-26, XP068107003, Retrieved from the Internet: URL:https://mentor.ieee.org/802.11/dcn/15/ 11-15-1358-05-00ay-specification-framework -for-tgay.doc [retrieved on 2016-08-17]
- Artyom Lomayev Intel ET AL: "Symbol Blocking and Guard Interval Definition for SC MIMO in 11ay Date: 2016-11-09 Authors: Name Affiliations Address Phone email", , 9 November 2016 (2016-11-09), pages 1-19, XP055419484, Retrieved from the Internet: URL:https://mentor.ieee.org/802.11/dcn/16/ 11-16-1429-00-00ay-symbol-blocking-and-gua rd-interval-definition-for-sc-mimo-in-11ay .pptx [retrieved on 2017-10-26]

## Description

### BACKGROUND

### Field of the Disclosure

Certain aspects of the present disclosure generally relate to wireless communications and, more particularly, to generating frames with different guard interval (GI) lengths.

### Description of Related Art

In order to address the issue of increasing bandwidth requirements demanded for wireless communications systems, different schemes are being developed to allow multiple user terminals to communicate with a single access point by sharing the channel resources while achieving high data throughputs. Multiple-input multiple-output (MIMO) technology represents one such approach that has recently emerged as a popular technique for next generation communication systems. MIMO technology has been adopted in several emerging wireless communications standards, such as the Institute of Electrical and Electronics Engineers (IEEE) 802.11 standard. The IEEE 802.11 standard denotes a set of Wireless Local Area Network (WLAN) air interface standards developed by the IEEE 802.11 committee for short-range communications (e.g., tens of meters to a few hundred meters).

A MIMO system employs multiple (*N_{T}*) transmit antennas and multiple (*N_{R}*) receive antennas for data transmission. A MIMO channel formed by the *N_{T}* transmit and *N_{R}* receive antennas may be decomposed into *N_{S}* independent channels, which are also referred to as spatial channels, where *N_{S}* ≤ min {*N_{T}*, *N_{R} } .* Each of the *N_{S}* independent channels corresponds to a dimension. The MIMO system can provide improved performance (e.g., higher throughput and/or greater reliability) if the additional dimensionalities created by the multiple transmit and receive antennas are utilized.

In wireless networks with a single Access Point (AP) and multiple user stations (STAs), concurrent transmissions may occur on multiple channels toward different stations, both in the uplink and downlink direction. Many challenges are present in such systems.
US 2012/294392 A1 concerns an apparatus having a receiver configured to receive an OFDM signal with a greenfield preamble and an interval select logic configured to determine a type of guard intervals in the OFDM signal based at least partially on the greenfield preamble.
Specification Framework for TGay IEEE Draft, Vol. 802.11ay, no. 5 17 August 2016 provides the framework from which the draft TGay amendment will be developed.
WO 2016/179493 A1, which was published on 10 November 2016, discloses methods and apparatuses for generating a frame for wireless transmission, wherein the frame comprises a payload including a plurality of blocks, each block comprising a data portion and a plurality of pilots distributed in the data portion. The distributed pilots may be used by a receiver receiving the frame to perform phase tracking during the data portions of the blocks to reduce phase noise.

### SUMMARY

The invention is defined in independent claims. Dependent claims concern particular embodiments of the invention. Any subject matter presented in the description but not falling under the claims constitutes an aspect of the disclosure which may be useful for understanding the invention.

The systems, methods, and devices of the disclosure each have several aspects, no single one of which is solely responsible for its desirable attributes. Without limiting the scope of this disclosure as expressed by the claims which follow, some features will now be discussed briefly. After considering this discussion, and particularly after reading the section entitled "Detailed Description" one will understand how the features of this disclosure provide advantages that include improved communications between access points and stations in a wireless network.

Aspects of the present disclosure also provide various methods, means, and computer program products corresponding to the apparatuses and operations described above.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings.
FIG. 1 is a diagram of an example wireless communications network, in accordance with certain aspects of the present disclosure.
FIG. 2 is a block diagram of an example access point and example user terminals, in accordance with certain aspects of the present disclosure.
FIGs. 3 and 4 illustrate example frame formats with blocks of symbols separated by guard interval (GIs).
FIG. 5 illustrates example operations for generating a frame with different length GIs, in accordance with certain aspects of the present disclosure.
FIG. 5A illustrates example components capable of performing operations shown in FIG. 5.
FIG. 6 illustrates one example of a frame format that utilizes different length GIs, in accordance with certain aspects of the present disclosure.
FIG. 7 illustrates another example of a frame format that utilizes different length GIs, in accordance with certain aspects of the present disclosure.
FIG. 8 illustrates how portions of longer GI sequences may be formed by shorter GI sequences, in accordance with certain aspects of the present disclosure.

### DETAILED DESCRIPTION

Certain aspects of the present disclosure provide methods and apparatus for generating frame formats with GI sequences of different lengths.

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein.

The word "exemplary" is used herein to mean "serving as an example, instance, or illustration." Any aspect described herein as "exemplary" is not necessarily to be construed as preferred or advantageous over other aspects.

Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims.

### AN EXAMPLE WIRELESS COMMUNICATION SYSTEM

The techniques described herein may be used for various broadband wireless communication systems, including communication systems that are based on an orthogonal multiplexing scheme. Examples of such communication systems include Spatial Division Multiple Access (SDMA), Time Division Multiple Access (TDMA), Orthogonal Frequency Division Multiple Access (OFDMA) systems, Single-Carrier Frequency Division Multiple Access (SC-FDMA) systems, and so forth. An SDMA system may utilize sufficiently different directions to simultaneously transmit data belonging to multiple user terminals. A TDMA system may allow multiple user terminals to share the same frequency channel by dividing the transmission signal into different time slots, each time slot being assigned to different user terminal. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA.

The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point ("AP") may comprise, be implemented as, or known as a Node B, a Radio Network Controller ("RNC"), an evolved Node B (eNB), a Base Station Controller ("BSC"), a Base Transceiver Station ("BTS"), a Base Station ("BS"). a Transceiver Function ("TF"), a Radio Router, a Radio Transceiver, a Basic Service Set ("BSS"), an Extended Service Set ("ESS"), a Radio Base Station ("RBS"), or some other terminology.

An access terminal ("AT") may comprise, be implemented as, or known as a subscriber station, a subscriber unit, a mobile station, a remote station, a remote terminal, a user terminal, a user agent, a user device, user equipment, a user station, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), an entertainment device (e.g., a music or video device, or a satellite radio), a global positioning system device, or any other suitable device that is configured to communicate via a wireless or wired medium. In some aspects, the node is a wireless node. Such wireless node may provide, for example, connectivity for or to a network (e.g., a wide area network such as the Internet or a cellular network) via a wired or wireless communication link.

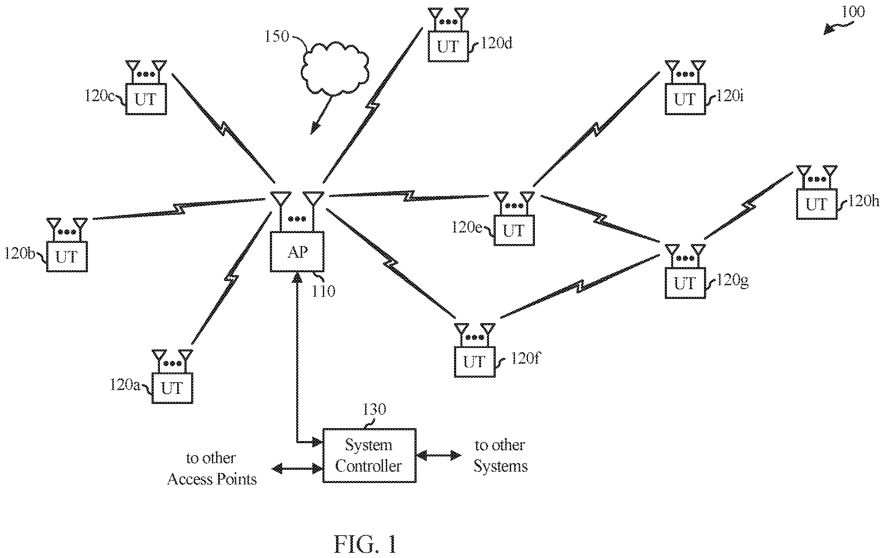

FIG. 1 illustrates a multiple-access multiple-input multiple-output (MIMO) system 100 with access points and user terminals. For simplicity, only one access point 110 is shown in FIG. 1. An access point is generally a fixed station that communicates with the user terminals and may also be referred to as a base station or some other terminology. A user terminal may be fixed or mobile and may also be referred to as a mobile station, a wireless device or some other terminology. Access point 110 may communicate with one or more user terminals 120 at any given moment on the downlink and uplink. The downlink (i.e., forward link) is the communication link from the access point to the user terminals, and the uplink (i.e., reverse link) is the communication link from the user terminals to the access point. A user terminal may also communicate peer-to-peer with another user terminal. A system controller 130 couples to and provides coordination and control for the access points.

While portions of the following disclosure will describe user terminals 120 capable of communicating via Spatial Division Multiple Access (SDMA), for certain aspects, the user terminals 120 may also include some user terminals that do not support SDMA. Thus, for such aspects, an access point (AP) 110 may be configured to communicate with both SDMA and non-SDMA user terminals. This approach may conveniently allow older versions of user terminals ("legacy" stations) to remain deployed in an enterprise, extending their useful lifetime, while allowing newer SDMA user terminals to be introduced as deemed appropriate.

The system 100 employs multiple transmit and multiple receive antennas for data transmission on the downlink and uplink. The access point 110 is equipped with *N ₐₚ* antennas and represents the multiple-input (MI) for downlink transmissions and the multiple-output (MO) for uplink transmissions. A set of *K* selected user terminals 120 collectively represents the multiple-output for downlink transmissions and the multiple-input for uplink transmissions. For pure SDMA, it is desired to have *N ₐₚ* ≥ *K ≥* 1 if the data symbol streams for the *K* user terminals are not multiplexed in code, frequency or time by some means. *K* may be greater than *N ₐₚ* if the data symbol streams can be multiplexed using TDMA technique, different code channels with CDMA, disjoint sets of subbands with OFDM, and so on. Each selected user terminal transmits user-specific data to and/or receives user-specific data from the access point. In general, each selected user terminal may be equipped with one or multiple antennas (i.e., *Nᵤₜ* ≥1). The *K* selected user terminals can have the same or different number of antennas.

The system 100 may be a time division duplex (TDD) system or a frequency division duplex (FDD) system. For a TDD system, the downlink and uplink share the same frequency band. For an FDD system, the downlink and uplink use different frequency bands. MIMO system 100 may also utilize a single carrier or multiple carriers for transmission. Each user terminal may be equipped with a single antenna (e.g., in order to keep costs down) or multiple antennas (e.g., where the additional cost can be supported). The system 100 may also be a TDMA system if the user terminals 120 share the same frequency channel by dividing transmission/reception into different time slots, each time slot being assigned to different user terminal 120.

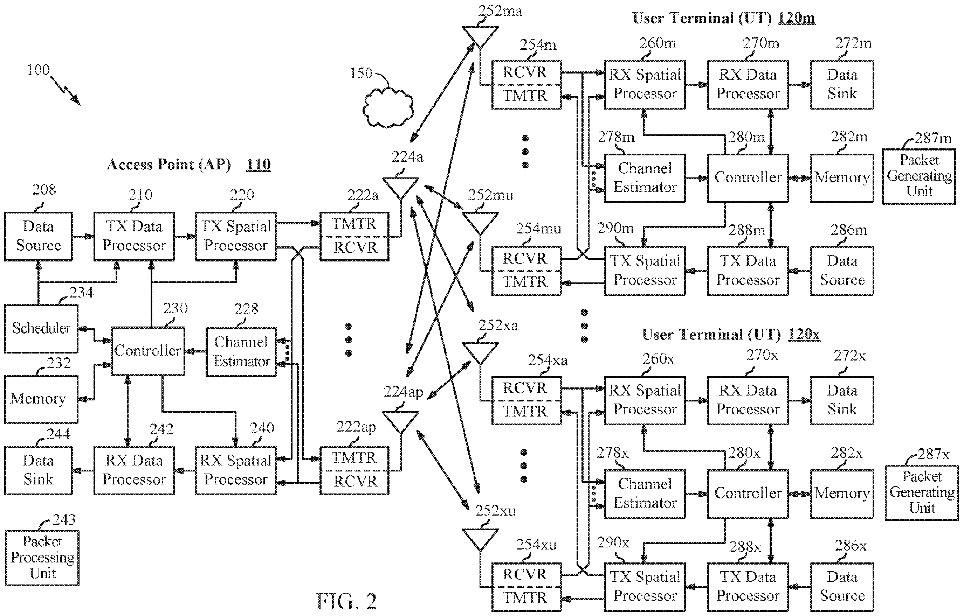

FIG. 2 illustrates a block diagram of access point 110 and two user terminals 120m and 120x in MIMO system 100. The access point 110 is equipped with *Nₜ* antennas 224a through 224t. User terminal 120m is equipped with *N_{ut,m}* antennas 252ma through 252mu, and user terminal 120x is equipped with *N_{ut,x}* antennas 252xa through 252xu. The access point 110 is a transmitting entity for the downlink and a receiving entity for the uplink. Each user terminal 120 is a transmitting entity for the uplink and a receiving entity for the downlink. As used herein, a "transmitting entity" is an independently operated apparatus or device capable of transmitting data via a wireless channel, and a "receiving entity" is an independently operated apparatus or device capable of receiving data via a wireless channel. In the following description, the subscript "dn" denotes tire downlink, the subscript "up" denotes the uplink, Nup user terminals are selected for simultaneous transmission on the uplink, Ndn user terminals are selected for simultaneous transmission on the downlink, Nup may or may not be equal to Ndn, and Nup and Ndn may be static values or can change for each scheduling interval. The beam-steering or some other spatial processing technique may be used at the access point and user terminal.

On the uplink, at each user terminal 120 selected for uplink transmission, a TX data processor 288 receives traffic data from a data source 286 and control data from a controller 280. TX data processor 288 processes (e.g., encodes, interleaves, and modulates) the traffic data for the user terminal based on the coding and modulation schemes associated with the rate selected for the user terminal and provides a data symbol stream. A TX spatial processor 290 performs spatial processing on the data symbol stream and provides *N*_{*ut*,m} transmit symbol streams for the *N_{ut,m}* antennas. Each transmitter unit (TMTR) of a transceiver 254 receives and processes (e.g., converts to analog, amplifies, filters, and frequency upconverts) a respective transmit symbol stream to generate an uplink signal. *N_{ut,m}* transmitter units of transceivers 254 provide *N_{ut,m}* uplink signals for transmission from *N_{ut,m}* antennas 252 to the access point.

Nup user terminals may be scheduled for simultaneous transmission on the uplink. Each of these user terminals performs spatial processing on its data symbol stream and transmits its set of transmit symbol streams on the uplink to the access point.

At access point 110, *Nₐₚ* antennas 224a through 224ap receive the uplink signals from all Nup user terminals transmitting on the uplink. Each antenna 224 provides a received signal to a respective receiver unit (RCVR) of a transceiver 222. Each receiver unit of transceivers 222 performs processing complementary to that performed by transmitter unit of transceivers 254 and provides a received symbol stream. An RX spatial processor 240 performs receiver spatial processing on the *Nₐₚ* received symbol streams from *Nₐₚ* receiver units of transceivers 222 and provides Nup recovered uplink data symbol streams. The receiver spatial processing is performed in accordance with the channel correlation matrix inversion (CCMI), minimum mean square error (MMSE), soft interference cancellation (SIC), or some other technique. Each recovered uplink data symbol stream is an estimate of a data symbol stream transmitted by a respective user terminal. An RX data processor 242 processes (e.g., demodulates, deinterleaves, and decodes) each recovered uplink data symbol stream in accordance with the rate used for that stream to obtain decoded data. The decoded data for each user terminal may be provided to a data sink 244 for storage and/or a controller 230 for further processing.

On the downlink, at access point 110, a TX data processor 210 receives traffic data from a data source 208 for Ndn user terminals scheduled for downlink transmission, control data from a controller 230, and possibly other data from a scheduler 234. The various types of data may be sent on different transport channels. TX data processor 210 processes (e.g., encodes, interleaves, and modulates) the traffic data for each user terminal based on the rate selected for that user terminal. TX data processor 210 provides Ndn downlink data symbol streams for the Ndn user terminals. A TX spatial processor 220 performs spatial processing (such as a precoding or beamforming, as described in the present disclosure) on the Ndn downlink data symbol streams, and provides *Nₐₚ* transmit symbol streams for the *Nₐₚ* antennas. Each transmitter unit of a transceiver 222 receives and processes a respective transmit symbol stream to generate a downlink signal. *Nₐₚ* transmitter units of transceivers 222 providing *Nₐₚ* downlink signals for transmission from *Nₐₚ* antennas 224 to the user terminals.

At each user terminal 120, *N_{ut,m}* antennas 252 receive the *Nₐₚ* downlink signals from access point 110. Each receiver unit of a transceiver 254 processes a received signal from an associated antenna 252 and provides a received symbol stream. An RX spatial processor 260 performs receiver spatial processing on *N_{ut,m}* received symbol streams from *N_{ut,m}* receiver units of transceivers 254 and provides a recovered downlink data symbol stream for the user terminal. The receiver spatial processing is performed in accordance with the CCMI, MMSE or some other technique. An RX data processor 270 processes (e.g., demodulates, deinterleaves and decodes) the recovered downlink data symbol stream to obtain decoded data for the user terminal.

At each user terminal 120, a channel estimator 278 estimates the downlink channel response and provides downlink channel estimates, which may include channel gain estimates, SNR estimates, noise variance and so on. Similarly, a channel estimator 228 estimates the uplink channel response and provides uplink channel estimates. Controller 280 for each user terminal typically derives the spatial filter matrix for the user terminal based on the downlink channel response matrix *H_{dn,m}* for that user terminal. Controller 230 derives the spatial filter matrix for the access point based on the effective uplink channel response matrix *H_{up,eff}.* Controller 280 for each user terminal may send feedback information (e.g., the downlink and/or uplink eigenvectors, eigenvalues, SNR estimates, and so on) to the access point. Controllers 230 and 280 also control the operation of various processing units at access point 110 and user terminal 120, respectively.

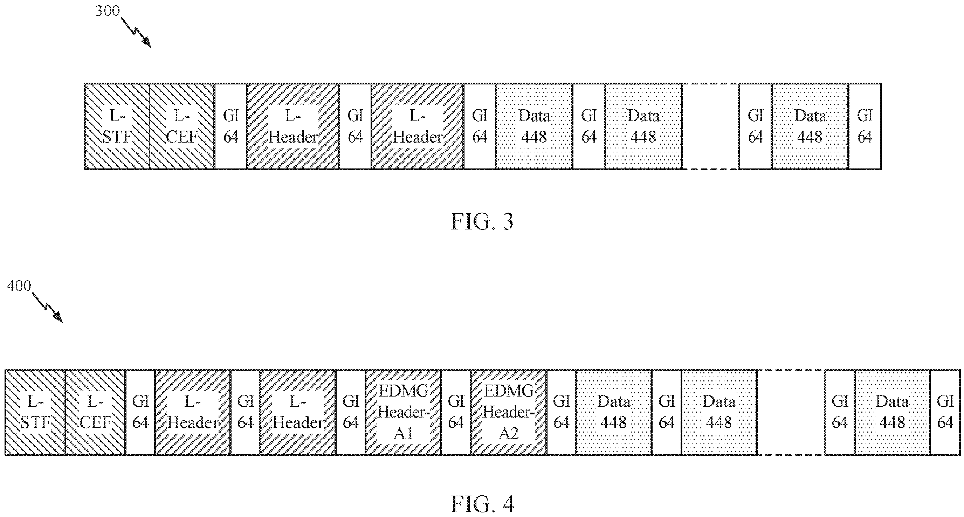

As illustrated, in FIGs. 1 and 2, one or more user terminals 120 may send one or more High Efficiency WLAN (HEW) packets 150, with a preamble format as described herein (e.g., in accordance with one of the example formats shown in FIGs. 3A-3B), to the access point 110 as part of a UL MU-MIMO transmission, for example, Each HEW packet 150 may be transmitted on a set of one or more spatial streams (e.g., up to 4). For certain aspects, the preamble portion of the HEW packet 150 may include tone-interleaved LTFs, subband-based LTFs, or hybrid LTFs (e.g., in accordance with one of the example implementations illustrated in FIGs. 10-13, 15, and 16).

The HEW packet 150 may be generated by a packet generating unit 287 at the user terminal 120. The packet generating unit 287 may be implemented in the processing system of the user terminal 120, such as in the TX data processor 288, the controller 280, and/or the data source 286.

After UL transmission, the HEW packet 150 may be processed (e.g., decoded and interpreted) by a packet processing unit 243 at the access point 110. The packet processing unit 243 may be implemented in the process system of the access point 110, such as in the RX spatial processor 240, the RX data processor 242, or the controller 230. The packet processing unit 243 may process received packets differently, based on the packet type (e.g., with which amendment to the IEEE 802.11 standard the received packet complies). For example, the packet processing unit 243 may process a HEW packet 150 based on the IEEE 802.11 HEW standard, but may interpret a legacy packet (e.g., a packet complying with IEEE 802.11a/b/g) in a different manner, according to the standards amendment associated therewith.

Certain standards, such as the IEEE 802.11ay standard currently in the development phase, extend wireless communications according to existing standards (e.g., the 802. 11ad standard) into the 60GHz band. Example features to be included in such standards include channel aggregation and Channel-Bonding (CB). In general, channel aggregation utilizes multiple channels that are kept separate, while channel bonding treats the bandwidth of multiple channels as a single (wideband) channel.

### EXAMPLE FRAME FORMAT WITH MULTIPLE GI LENGTHS

A new standard 11ay for 60GHz communication is under development in the 802.11 working group under task group TGay. This may include an enhancement of the existing 802 .11TGad (DMG-Directional Multi-Gigabit) standard . This standard may increase the PHY throughput in 60GHz by using methods such as MIMO and channel bonding/channel aggregation . One of the modes of the new standard is the SISO single carrier (SC) operating mode. This mode is similar to the legacy 802.11ad SC mode. The differences in this mode from the legacy 802.11ad mode may be the addition of high non uniform constellations, different length LDPC code, and the addition of short and long GI (Guard Interval).

Aspects of the present disclosure may provide frame formats with sequence designs that may be used for the different (e.g., normal/long/short) GI lengths.

The GI may be used to prevent inter block interference for SC blocks of length of 512 symbols and to enable frequency offset and phase tracking. Different GI lengths provide different advantages. For example, the use of a short GI may enable higher rate due to the lower overhead. On the other hand, the use of a long GI may enable working in channels that have a greater delay spread (e.g., longer than 64 chips).

FIG. 3 illustrates an example frame 300, with a GI configuration of a legacy (e.g., 802.11ad) packet. As illustrated, the frame 300 may have a preamble with a legacy short training field (L-STF) and legacy channel estimation field (L-CEF), followed by legacy headers. A data payload with symbol blocks may follow the preamble.

As illustrated, all the GIs are with a constant length of 64 single carrier symbols. The sequence used for the GI is a 64 symbols Golay sequence which is defined in the 802.1 1ad standard.

FIG. 4 shows a proposed 802.11ay packet 400 for single carrier (SC) single in single output (SISO) transmission in accordance with one or more cases. After the L-Header, there are two symbols of EDMG (802.1 1ay) header followed by data symbols. The EDMG header symbols may have the same format as the legacy.

Aspects of the present disclosure may facilitate the use of different length GIs, for example, with a first GI used in a legacy (constant) portion of a frame and a second GI used in a later portion.

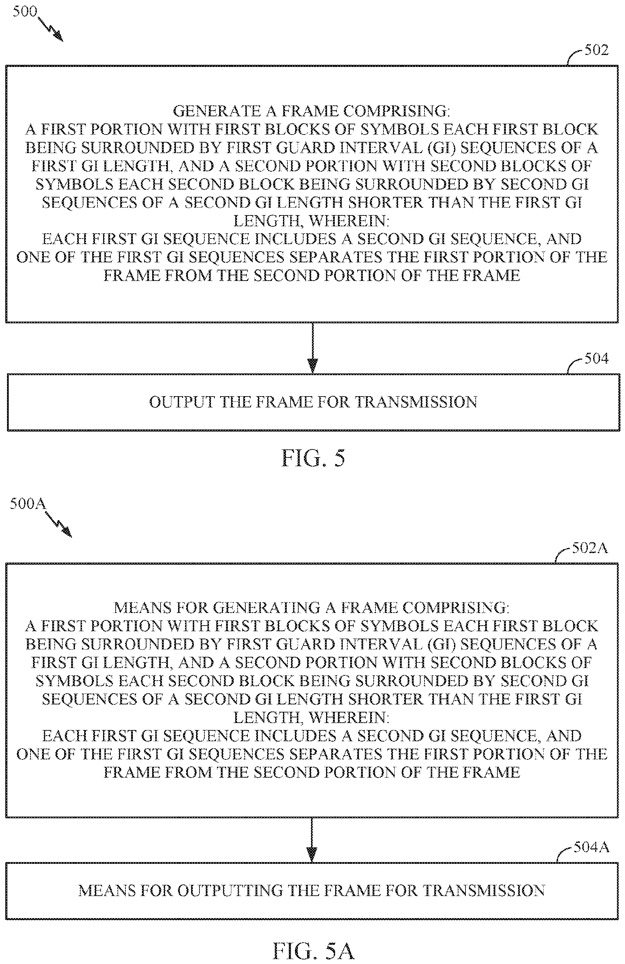

FIG. 5 illustrates example operations 500 for generating a frame with different length GIs, in accordance with certain aspects of the present disclosure. The operations 500 begin, at 502, by generating a first portion with first blocks of symbols each first block being surrounded by first guard interval (GI) sequences of a first GI length, and a second portion with second blocks of symbols each second block being surrounded by second GI sequences of a second GI length shorter than the first GI length. Each first GI sequence includes a second GI sequence, and one of the first GI sequences separates the first portion of the frame from the second portion of the frame. At 504, the frame is output for transmission.

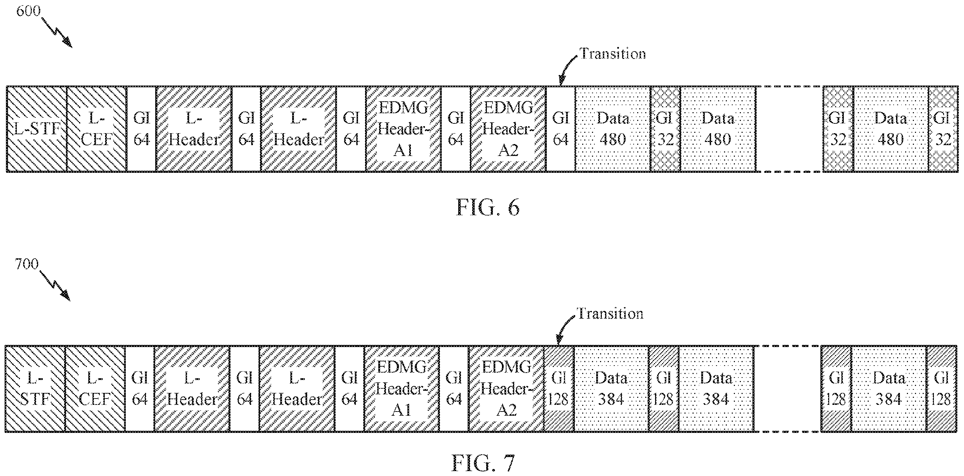

In the format of FIG. 7, to provide a transition between the different GI lengths used in the first and second portions, the first part of the second longer GI is equivalent to the shorter first GI. By having the first part of the second longer GI be equivalent to the shorter first GI, the last (ending) header in a preamble (e.g., EDMG Header A-2) has the first shorter GI on each side (the first part of the longer GI serves as the shorter GI), while the first data block has the second longer GI on each side, which may enable phase tracking. In an alternate format (shown in FIG. 6), the longer GI may be used in the preamble portion while the shorter GI is used in the data portion. In this case, the second part of the longer GI (which precedes the first block in the data portion) may be equivalent to the shorter GI. As a result, the last header in a preamble (e.g., EDMG Header A-2) has the longer GI on each side (the pair of longer GIs surrounds the last header), while the first data block has the shorter GI on each side.

The shorter and longer shorter GI lengths may be determined based on various considerations. For example, as noted above, a longer GI may be used to prevent inter block interference and to enable frequency offset and phase tracking, while the use of a short GI may enable higher rate due to the lower overhead. On the other hand, the use of a long GI may enable working in channels that have a greater delay spread (e.g., longer than 64 chips). Therefore, in some cases, a transmitting entity may determine a GI length based on one or more channel conditions.

As illustrated in the frame formats 600 and 700 of FIGs. 6 and 7, the GI design provided herein may, for example, allow a transition at the junction between the legacy (constant) part of the packet (e.g., which ends with the EDMG Header A-2 symbols and the GI that follows the legacy part and the next data symbol. While only two GI sequences are shown in these examples, the techniques may be extended to frame formats with more than two portions (e.g., there may be a third portion or more), with such a transition GI sequence between each portion. Further, the techniques are not limited to any particular type of frame format (or standard), but may be used in any type of frame format in which different GI lengths are used in different portions.

As will be described in greater detail below, the transitional GI may be the longer of the GI sequences used in the different portions.

For example, in FIG. 6, because a shorter GI sequence (GI 32) is used in the data portion, the legacy GI sequence (GI 64) is used at the transition. The second half of the GI 64 used at the first GI is equal to the shorter GI sequence used in the second GI (GI 32) On the other hand, in FIG. 7, because a longer GI sequence (GI 128) is used in the data portion, this longer GI sequence is used at the transition.

As described above, the GI sequences may be used for phase tracking so it may be beneficial to have the same GI sequence at each side of both EDMG Header-A 2 and the first data symbols. In other words, each such block of symbols may be surrounded by the same GI sequence thereby providing a cyclic structure.

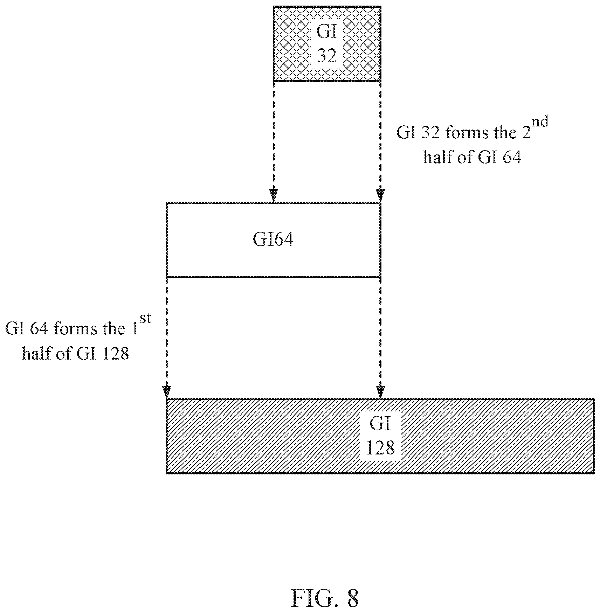

This result may be achieved if the GIs have structure as in FIG. 8. As illustrated, the second half of the GI 64 may be formed with GI 32. As a result, when GI 64 is used as the transition (as shown in FIG. 6), the entire GI 64 may serve as the GI sequence for the end symbol block in the legacy portion (e.g., EDMG Header A2), resulting in GI 64 at both ends, while the GI 32 (which forms the second half of the GI 64) may serve as the GI sequence for the starting symbol block in the data portion, resulting in GI 32 at both ends. As used herein, the term starting generally refers to a first or beginning location in time (e.g., the starting symbol block in the data portion refers to the symbol block in the data portion that occurs first in time).

Similarly, the first half of the GI 128 may be formed with GI 64. As a result, when GI 128 is used as the transition (as shown in FIG. 7), the first half of the GI 128 (GI 64) may serve as the GI sequence for EDMG Header A2, while the entire GI 128 may serve as the GI sequence for the starting symbol block in the data portion.

In some cases, an existing legacy GI 64 sequence may be used as the GI sequence for length 64. For the length 32 GI, the sequence may be generated using a defined technique, such as that defined in clause 20.11 of 802.11 RevMC, with D=[2 1 4 8 16] and W=[1 1 -1 -1 1]. For length 128 GI, a negation of the sequence generated by the technique defined in clause 20.11 of 802.11 RevMC may be used, for example, with D=[2 1 4 8 16 32 64] and W=[1 1 -1 -1 1 1 1]. These sequences have the property that the GI32 is the last 32 samples of the GI64 and that the GI64 is the first 64 samples of GI128, as shown in FIG. 8. This may help simplify design, as the GI 128 sequence may always be generated, and only the relevant portions needed for GI 32 and GI 64 may be used.

The packet formats shown in FIGs. 4, 6, and 7, respectively, may be used as the packet formats for GI of 64, 32, and 128, respectively, used in the non-legacy portion of the packet.

In some cases, the length of the data blocks may be adjusted with GI length For example, the data block length may be adjusted to maintain a fixed length when the GI is added. As an example, with GIs of 32, 64, and 128, data block lengths of 480, 448, and 384 may be used to maintain a 512 length, which may match an FFT size.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering. For example, operations 500 illustrated in FIG. 5 correspond to means 500A illustrated in FIG. 5A.

For example, means for transmitting (or means for outputting for transmission) may include a transmitter (e.g., the transmitter unit of transceiver 222) and/or an antenna(s) 224 of the access point 110 or the transmitter unit of transceiver 254 and/or antenna(s) 252 of the user terminal 120 illustrated in FIG. 2. Means for receiving (or means for obtaining) may include a receiver (e.g., the receiver unit of transceiver 222) and/or an antenna(s) 224 of the access point 110 or the receiver unit of transceiver 254 and/or antenna(s) 252 of the user terminal 120 illustrated in FIG. 2. Means for generating may include a processing system, which may include one or more processors, such as the RX data processor 242, the TX data processor 210, the TX spatial processor 220, and/or the controller 230 of the access point 110 or the RX data processor 270, the TX data processor 288, the TX spatial processor 290, and/or the controller 280 of the user terminal 120 illustrated in FIG. 2.

In some cases, rather than actually transmitting a frame a device may have an interface to output a frame for transmission (a means for outputting). For example, a processor may output a frame, via a bus interface, to a radio frequency (RF) front end for transmission. Similarly, rather than actually receiving a frame, a device may have an interface to obtain a frame received from another device (a means for obtaining). For example, a processor may obtain (or receive) a frame, via a bus interface, from an RF front end for reception.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, a phrase referring to "at least one of" a list of items refers to any combination of those items, including single members. As an example, "at least one of: a, 6, or c" is intended to cover a, b, c, a-b, a-c, b-c, and a-b-c, as well as combinations that include multiples of one or more members (aa, bb, and/or cc).

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method.

The functions described may be implemented in hardware, software, firmware, or any combination thereof. If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processor may be responsible for managing the bus and general processing, including the execution of software stored on the machine-readable media. The processor may be implemented with one or more general-purpose and/or special-purpose processors. Examples include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. Tire machine-readable media may be embodied in a computer-program product. The computer-program product may comprise packaging materials.

In a hardware implementation, the machine-readable media may be part of the processing system separate from die processor. However, as those skilled in the art will readily appreciate, the machine-readable media, or any portion thereof, may be external to the processing system. By way of example, the machine-readable media may include a transmission line, a carrier wave modulated by data, and/or a computer product separate from the wireless node, all which may be accessed by the processor through the bus interface. Alternatively, or in addition, the machine-readable media, or any portion thereof, may be integrated into the processor, such as the case may be with cache and/or general register files.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may be implemented with an ASIC (Application Specific Integrated Circuit) with the processor, the bus interface, the user interface in the case of an access terminal), supporting circuitry , and at least a portion of the machine-readable media integrated into a single chip, or with one or more FPGAs (Field Programmable Gate Arrays), PLDs (Programmable Logic Devices), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

The machine-readable media may comprise a number of software modules. The software modules include instructions that, when executed by the processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

## Claims

1. An apparatus for wireless communications, comprising:
means for generating (502A) a frame comprising:
a first portion with first blocks of symbols, each first block being surrounded by first guard interval, GI, sequences of a first GI length, each of the first GI sequences having a first half and a second half, wherein the first half is closer towards a beginning of the frame as compared to the second half of said each first GI sequence, and
a second portion with second blocks of symbols, each second block being surrounded by second GI sequences of a second GI length shorter than the first GI length, wherein:
the second portion of the frame precedes the first portion of the frame,
each of the first half of the first GI sequences is formed by one of the said second GI sequences, and
the first half of a first GI sequence at a starting first block of the first portion of the frame serves as one of the second GI sequences that surrounds an ending second block of the second portion of the frame; and
means for outputting (504A) the frame for transmission.

2. The apparatus of claim 1, further comprising:
means for determining the second GI length based on one or more channel conditions.

3. The apparatus of claim 1, wherein the first blocks of symbols and the second blocks of symbols comprise single carrier, SC, symbols.

4. The apparatus of claim 1, wherein the first GI sequences and the second GI sequences comprise Golay code sequences.

5. The apparatus of claim 1, wherein the frame also has:
a third portion with third blocks of symbols, each third block being surrounded by third GI sequences of a third GI length, wherein
each second GI sequence includes one of the third GI sequences, and
one of the second GI sequences separates the second portion from the third portion.

6. The apparatus of claim 1, wherein the first blocks of symbols and the second blocks of symbols have different block lengths.

7. A method for wireless communications by an apparatus, comprising:
generating (502) a frame comprising:
a first portion with first blocks of symbols, each first block being surrounded by first guard interval, GI, sequences of a first GI length, each of the first GI sequences having a first half and a second half, wherein the first half is closer towards a beginning of the frame as compared to the second half of said each first GI sequence, and
a second portion with second blocks of symbols, each second block being surrounded by second GI sequences of a second GI length shorter than the first GI length, wherein:
the second portion o the frame precedes the first portion of the frame,
each of the first half of the first GI sequences is formed by one of said second GI sequences, and
the first half of a first GI sequence at a starting first block of the first portion of the frame serves as one of the second GI sequences that surrounds an ending second block of the second portion of the frame; and
outputting (504) the frame for transmission.

8. The method of claim 7, further comprising:
determining the second GI length based on one or more channel conditions.

9. The method of claim 7, wherein the first blocks of symbols and the second blocks of symbols comprise single carrier, SC, symbols.

10. The method of claim 7, wherein the first GI sequences and the second GI sequences comprise Golay code sequences.

11. The method of claim 7, wherein the frame also has:
a third portion with third blocks of symbols, each third block being surrounded by third GI sequences of a third GI length, wherein
each second GI sequence includes one of the third GI sequences, and
one of the second GI sequences separates the second portion from the third portion.

12. The method of claim 7, wherein the first blocks of symbols and the second blocks of symbols have different block lengths.

13. Computer program comprising processor-readable instructions which, when executed by a processor, cause the processor to perform a method according to one of claims 7 to 12.

## Patentansprüche

1. Vorrichtung für drahtlose Kommunikationen, umfassend:
Mittel zum Erzeugen (502A) eines Rahmens, umfassend:
einen ersten Abschnitt mit ersten Blöcken von Symbolen, wobei jeder erste Block von ersten Schutzintervall-, GI-, Sequenzen einer ersten GI-Länge umgeben ist, wobei jede der ersten GI-Sequenzen eine erste Hälfte und eine zweite Hälfte aufweist, wobei die erste Hälfte im Vergleich zu der zweiten Hälfte jeder ersten GI-Sequenz näher an einem Anfang des Rahmens ist, und
einen zweiten Abschnitt mit zweiten Blöcken von Symbolen, wobei jeder zweite Block von zweiten GI-Sequenzen einer zweiten GI-Länge umgeben ist, die kürzer als die erste GI-Länge ist, wobei:
der zweite Abschnitt des Rahmens dem ersten Abschnitt des Rahmens vorangeht,
jede der ersten Hälfte der ersten GI-Sequenzen durch eine der zweiten GI-Sequenzen gebildet wird, und
die erste Hälfte einer ersten GI-Sequenz an einem anfangenden ersten Block des ersten Abschnitts des Rahmens als eine der zweiten GI-Sequenzen dient, die einen endenden zweiten Block des zweiten Abschnitts des Rahmens umgibt; und
Mittel zum Ausgeben (504A) des Rahmens zum Übertragen.

2. Vorrichtung gemäß Anspruch 1, ferner umfassend:
Mittel zum Bestimmen der zweiten GI-Länge basierend auf einer oder mehreren Kanalbedingungen.

3. Vorrichtung gemäß Anspruch 1, wobei die ersten Blöcke von Symbolen und die zweiten Blöcke von Symbolen Einzelträger-, SC-, Symbole umfassen.

4. Vorrichtung gemäß Anspruch 1, wobei die ersten GI-Sequenzen und die zweiten GI-Sequenzen Golay-Codesequenzen umfassen.

5. Vorrichtung gemäß Anspruch 1, wobei der Rahmen auch aufweist:
einen dritten Abschnitt mit dritten Blöcken von Symbolen, wobei jeder dritte Block von dritten GI-Sequenzen einer dritten GI-Länge umgeben ist, wobei
jede zweite GI-Sequenz eine der dritten GI-Sequenzen umfasst, und
eine der zweiten GI-Sequenzen den zweiten Abschnitt von dem dritten Abschnitt trennt.

6. Vorrichtung gemäß Anspruch 1, wobei die ersten Blöcke von Symbolen und die zweiten Blöcke von Symbolen unterschiedliche Blocklängen aufweisen.

7. Verfahren für drahtlose Kommunikationen durch eine Vorrichtung, umfassend:
Erzeugen (502) eines Rahmens, umfassend:
einen ersten Abschnitt mit ersten Blöcken von Symbolen, wobei jeder erste Block von ersten Schutzintervall-, GI-, Sequenzen einer ersten GI-Länge umgeben ist, wobei jede der ersten GI-Sequenzen eine erste Hälfte und eine zweite Hälfte aufweist, wobei die erste Hälfte im Vergleich zu der zweiten Hälfte jeder ersten GI-Sequenz näher an einem Anfang des Rahmens ist, und
einen zweiten Abschnitt mit zweiten Blöcken von Symbolen, wobei jeder zweite Block von zweiten GI-Sequenzen einer zweiten GI-Länge umgeben ist, die kürzer als die erste GI-Länge ist, wobei:
der zweite Abschnitt des Rahmens dem ersten Abschnitt des Rahmens vorangeht,
jede der ersten Hälfte der ersten GI-Sequenzen durch eine der zweiten GI-Sequenzen gebildet wird, und
die erste Hälfte einer ersten GI-Sequenz an einem anfangenden ersten Block des ersten Abschnitts des Rahmens als eine der zweiten GI-Sequenzen dient, die einen endenden zweiten Block des zweiten Abschnitts des Rahmens umgibt; und
Ausgeben (504) des Rahmens zum Übertragen.

8. Verfahren gemäß Anspruch 7, ferner umfassend:
Bestimmen der zweiten GI-Länge basierend auf einer oder mehreren Kanalbedingungen.

9. Verfahren gemäß Anspruch 7, wobei die ersten Blöcke von Symbolen und die zweiten Blöcke von Symbolen Einzelträger-, SC-, Symbole umfassen.

10. Verfahren gemäß Anspruch 7, wobei die ersten GI-Sequenzen und die zweiten GI-Sequenzen Golay-Codesequenzen umfassen.

11. Verfahren gemäß Anspruch 7, wobei der Rahmen auch aufweist:
einen dritten Abschnitt mit dritten Blöcken von Symbolen, wobei jeder dritte Block von dritten GI-Sequenzen einer dritten GI-Länge umgeben ist, wobei
jede zweite GI-Sequenz eine der dritten GI-Sequenzen umfasst, und
eine der zweiten GI-Sequenzen den zweiten Abschnitt von dem dritten Abschnitt trennt.

12. Verfahren gemäß Anspruch 7, wobei die ersten Blöcke von Symbolen und die zweiten Blöcke von Symbolen unterschiedliche Blocklängen aufweisen.

13. Computerprogramm, umfassend prozessorlesbare Anweisungen, die, wenn sie von einem Prozessor ausgeführt werden, den Prozessor veranlassen, ein Verfahren gemäß einem der Ansprüche 7 bis 12 durchzuführen.

## Revendications

1. Un appareil pour la communication sans fil, comprenant :
un moyen pour générer (502A) une trame comprenant :
une première partie avec des premiers blocs de symboles, chaque premier bloc étant entouré de premières séquences d'intervalle de garde, GI, ayant une première longueur de GI, chacune des premières séquences de GI ayant une première moitié et une seconde moitié, dans lequel la première moitié est située plus proche d'un début de la trame que la seconde moitié de chaque dite première séquence de GI, et
une deuxième partie avec des deuxièmes blocs de symboles, chaque deuxième bloc étant entouré par des deuxièmes séquences de GI ayant une deuxième longueur de GI plus courte que la première longueur de GI, dans lequel :
la deuxième partie de la trame précède la première partie de la trame,
chaque première moitié des premières séquences de GI est formée par l'une desdites deuxièmes séquences de GI, et
la première moitié d'une première séquence de GI au niveau d'un premier bloc de départ de la première partie de la trame fait fonction de l'une des deuxièmes séquences de GI qui entoure un second bloc de terminaison de la deuxième partie de la trame ; et
un moyen pour délivrer en sortie (504A) la trame pour transmission.

2. L'appareil selon la revendication 1, comprenant en outre :
un moyen pour déterminer la deuxième longueur de GI sur la base d'une ou plusieurs conditions de canal.

3. L'appareil selon la revendication 1, dans lequel les premiers blocs de symboles et les deuxièmes blocs de symboles comprennent des symboles de porteuse unique, SC.

4. L'appareil selon la revendication 1, dans lequel les premières séquences de GI et les deuxièmes séquences de GI comprennent des séquences de code de Golay.

5. L'appareil selon la revendication 1, dans lequel la trame comporte également :
une troisième partie avec des troisièmes blocs de symboles, chaque troisième bloc étant entouré par des troisièmes séquences de GI ayant une troisième longueur de GI, dans lequel
chaque deuxième séquence de GI comprend l'une des troisièmes séquences de GI, et
l'une des deuxièmes séquences de GI sépare la deuxième partie de la troisième partie.

6. L'appareil selon la revendication 1, dans lequel les premiers blocs de symboles et les deuxièmes blocs de symboles ont des longueurs de bloc différentes.

7. Un procédé de communication sans fil par un appareil, comprenant :
la génération (502) d'une trame comprenant :
une première partie avec des premiers blocs de symboles, chaque premier bloc étant entouré de premières séquences d'intervalle de garde, GI, ayant une première longueur de GI, chacune des premières séquences de GI ayant une première moitié et une seconde moitié, dans lequel la première moitié est située plus proche d'un début de la trame que la seconde moitié de chaque dite première séquence de GI, et
une deuxième partie avec des deuxièmes blocs de symboles, chaque deuxième bloc étant entouré par des deuxièmes séquences de GI ayant une deuxième longueur de GI plus courte que la première longueur de GI, dans lequel :
la deuxième partie de la trame précède la première partie de la trame,
chaque première moitié des premières séquences de GI est formée par l'une desdites deuxièmes séquences de GI, et
la première moitié d'une première séquence de GI au niveau d'un premier bloc de départ de la première partie de la trame fait fonction de l'une des deuxièmes séquences de GI qui entoure un second bloc de terminaison de la deuxième partie de la trame ; et
la délivrance en sortie (504A) de la trame pour transmission.

8. Le procédé selon la revendication 7, comprenant en outre :
la détermination de la deuxième longueur de GI sur la base d'une ou plusieurs conditions de canal.

9. Le procédé selon la revendication 7, dans lequel les premiers blocs de symboles et les deuxièmes blocs de symboles comprennent des symboles de porteuse unique, SC.

10. Le procédé selon la revendication 7, dans lequel les premières séquences de GI et les deuxièmes séquences de GI comprennent des séquences de code de Golay.

11. Le procédé selon la revendication 7, dans lequel la trame comporte également :
une troisième partie avec des troisièmes blocs de symboles, chaque troisième bloc étant entouré par des troisièmes séquences de GI ayant une troisième longueur de GI, dans lequel
chaque deuxième séquence de GI comprend une des troisièmes séquences de GI, et
une des deuxièmes séquences de GI sépare la deuxième partie de la troisième partie.

12. Le procédé selon la revendication 7, dans lequel les premiers blocs de symboles et les deuxièmes blocs de symboles ont des longueurs de bloc différentes.

13. Un programme de calculateur comprenant des instructions lisibles par calculateur qui, quand elles sont exécutées par un processeur, amènent le processeur à réaliser un procédé selon une des revendications 7 à 12.
